# EUROPEAN PATENT APPLICATION

(11) **EP 2 541 619 A1**
(43) Date of publication of application: **02.01.2013**
(21) Application number: 11183783.7
(22) Date of filing: 04.10.2011
(51) Int. Cl.: H01L 31/042, H01L 31/052

(54) **Photovoltaic plate for covering buildings, particularly for the industrial building sector**

(30) Priority: 01.07.2011 IT AR20110015
(71) Applicant: Falsini, Roberto, 52012 Bibbiena Stzione (AR) (IT)
(72) Inventor: Falsini, Roberto, 52012 Bibbiena Stzione (AR) (IT)
(74) Representative: Modiano, Micaela Nadia

(57) **Abstract**

A photovoltaic plate (1) for covering buildings, particularly for the industrial building sector, which has the peculiarity of comprising a supporting frame (2), which is adapted to be associated with the upper portion of a building (9) and is connected to photovoltaic panels (3) covering the building. Means are moreover provided for the draining and discharge of rainwater and condensation toward the outside of the building (9).

## Description

The present invention relates to a photovoltaic plate for covering buildings, particularly for the industrial building sector.

In the current state of the art, films of material based on cadmium telluride exist on the market, enclosed between two flexible transparent plates of plastic, which capture the sun's rays and produce electricity. These films, known technically as "thin film", are particularly adapted to be joined by means of adhesive bonding to sheets for covering industrial buildings.

Compared to silicon photovoltaic cells, thin film costs much less but has a considerably reduced capacity for absorption of solar energy compared to microamorphous, monocrystalline or polycrystalline panels.

Moreover, such devices have considerable drawbacks regarding transport and assembly owing to difficulty in movement, poor capacity for being walked on of such a covering, and freedom of design, which is always hampered by measurements imposed by the producers of thin films.

Finally, given that these products are not readily available on the market, if it becomes necessary to replace one or more of these films, the supplier company has to be contacted, with all the problems of time and cost that this involves.

Also known is the use of flexible voltaic cells on waterproofing membranes, consisting of a sort of impermeable mantle, adapted to be bonded on-site to the covering, which supplements flexible photovoltaic cells.

In essence, the membrane presents an impermeable adhesive mantle for supporting flexible photovoltaic modules of amorphous silicon which are connected in turn to the other components of the photovoltaic system (inverter, wires, connectors etc.).

Even though the yield of this type of photovoltaic plate is better than that of thin films, it is still lower than the yield offered by microamorphous, monocrystalline or polycrystalline panels, and all the problems mentioned above, associated with transport, movement of the covering and replaceability, remain.

Moreover, if there is a change in the intended use of the building, the covering is not at all flexible and for example it is not possible to make passages that may be needed in the covering for chimney stacks, heat and smoke extractors, skylights etc., thus forcing the owner of the building to make a new investment without being able to alter the thin film or the flexible membrane.

The aim of the present invention is to eliminate the above-mentioned drawbacks in known types of photovoltaic plates for covering buildings, particularly for the industrial building sector, which ensures the maximum energy yield.

Within this aim, an object of the invention is to provide a photovoltaic plate for covering buildings, particularly for the industrial building sector, which allows quick and easy assembly of easily transportable parts on site.

Another object of the invention is to allow the quick and cheap replacement of the plate or of its parts, without necessarily resorting to the supplier company.

Another object of the invention is to provide a photovoltaic plate for covering buildings that is easily adaptable to any type of covering and flexible for the purposes of modifications that the building may undergo, without the need to make a new photovoltaic investment.

Another object of the invention is to provide a photovoltaic plate for covering buildings, particularly for the industrial building sector, with means that are readily available on the market and employing commonlyused materials, so that the photovoltaic plate is economically competitive and exhibits characteristics such as reaction to fire as well as insulation capacity.

This aim and these and other objects which will become more apparent hereinafter, are achieved by a photovoltaic plate for covering buildings, particularly for the industrial building sector, characterized in that it comprises:
- a supporting frame, which is adapted to be associated with the upper portion of a building and is connected to photovoltaic panels for covering said building, and
- means for the draining and discharge of rainwater and condensation toward the outside of said building.

Further characteristics and advantages of the invention will become more apparent from the description of a preferred, but not exclusive, embodiment of the photovoltaic plate for covering buildings, particularly for the industrial building sector, which is illustrated for the purposes of nonlimiting example in the accompanying drawings wherein:
Figure 1 is a view of the cross-section marked I-I of the photovoltaic plate for covering buildings, particularly for the industrial building sector, according to the invention;
Figure 2 is a plan view of the photovoltaic plate;
Figure 3 is a view of the cross-section marked III-III of the photovoltaic plate;
Figure 4 is a view of the cross-section marked IV-IV of the photovoltaic plate;
Figure 5 is a normal cross-section with respect to the covering surface of a second embodiment of the photovoltaic plate for covering buildings, particularly for the industrial building sector, according to the invention.

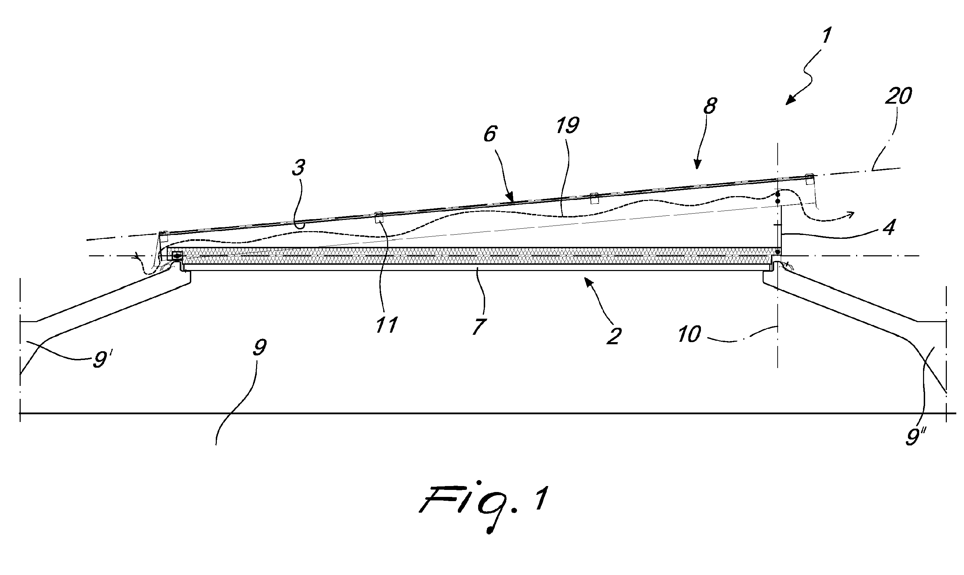

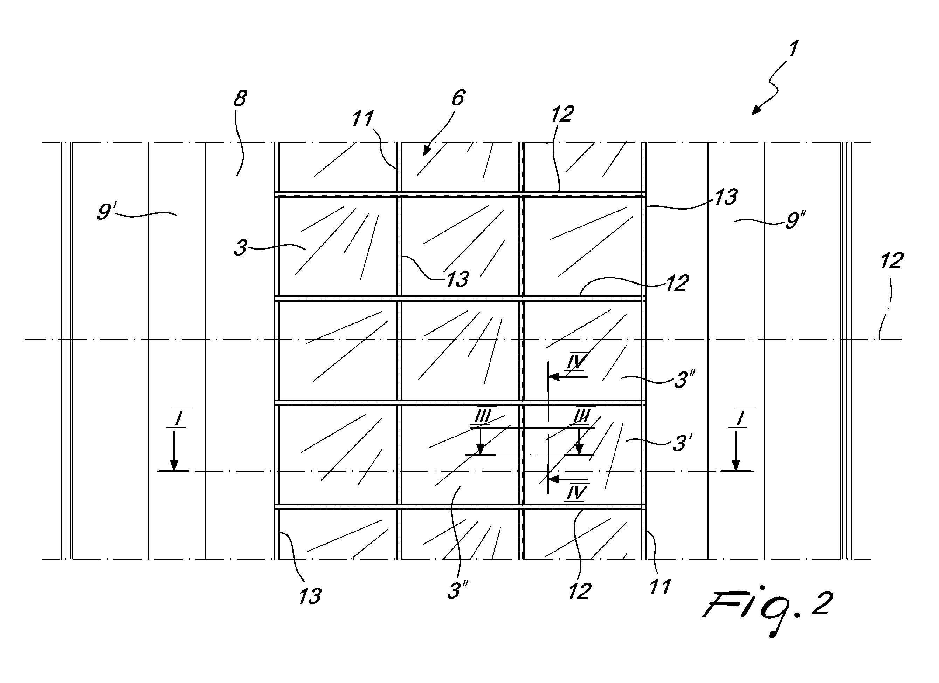

With reference to the figures, a photovoltaic plate for covering buildings, particularly for the industrial building sector, according to the invention, which is generally designated with the reference numeral 1, has the basic characteristic of comprising:
- a supporting frame 2, which is adapted to be associated with the upper portion of a building 9, for example the two prefabricated tiles 9^{I} and 9^{II} of Figures 1 and 2, and is connected to microamorphous, monocrystalline or polycrystalline photovoltaic panels 3 covering the building 9, and
- means for the draining and discharge of rainwater toward the outside of the building 9.

In the embodiments disclosed herein, the supporting frame 2 is adapted to be removably connected to the upper portion of the building 9.

Advantageously, the frame 2 has at least one supporting member 4 for a truss 6 for supporting the photovoltaic panels 3. The truss 6 forms a covering surface 8 which is inclined with respect to the ground; the member 4 defines a vertical direction 10 which is substantially normal with respect to the ground.

The frame 2 can preferably define a ventilation chamber 19, arranged below the truss 6, for cooling the panels 3.

In the solutions described herein, the supporting member comprises a series of vertical columns 4, all of which extend along the vertical direction 10 and are connected to the frame 6.

The truss 6 can have transverse beams 11 which extend along the direction of extension 20 of the panel 3 and longitudinal beams 12 which are substantially normal to the direction 20 on the covering surface 8. The transverse beams 11 and the longitudinal beams 12 are connected to each other.

Preferably, fall-preventing means can be provided which are anchored to the truss 6, such as for example nets made of steel or other material like cord, stainless steel etc., or other, similar systems.

Preferably, means can be provided for fastening the feet of the columns 4 to the upper portion of the building 9.

The supporting frame 2 can be made of aluminum, a material that provides lightness, good mechanical strength and excellent passivation. All these are characteristics make it suitable to be mounted on coverings of buildings in contact with atmospheric agents.

However, the possibility is not ruled out of using stainless steel or galvanized materials or materials made of other alloys.

Advantageously, means can be provided for coupling the panels 3 to the truss 6.

Preferably, these coupling means are provided, on the truss 6, with at least one receptacle 13 for a peripheral portion of each one of the photovoltaic panels 3 and means for locking each panel to the truss 6.

Preferably, the locking means can comprise rubber pads 14, which are of a known type, for fixing each one of the panels 3 in a preset position.

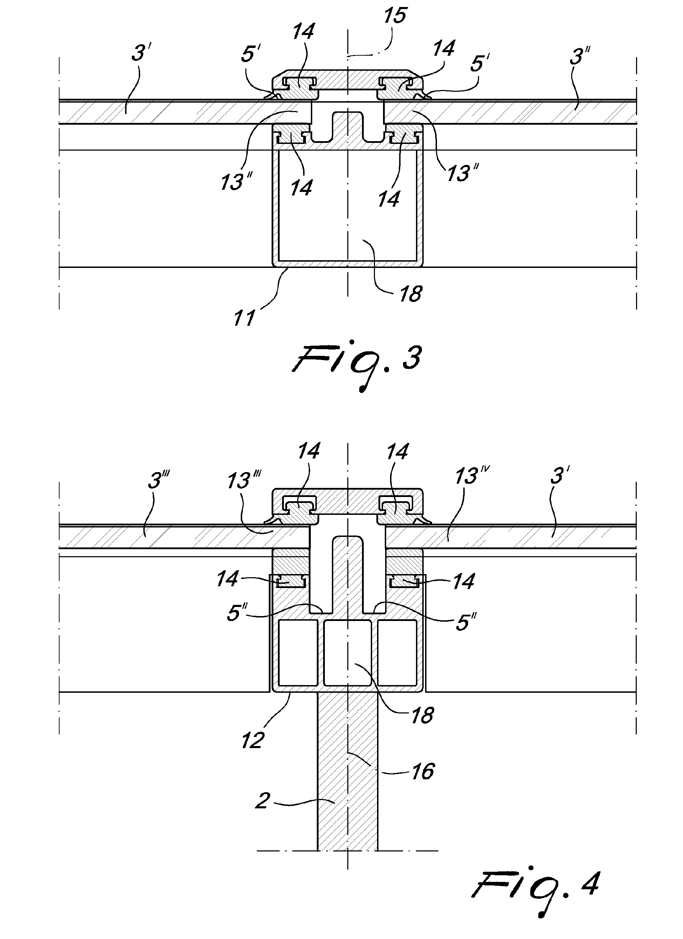

With reference to Figure 3, each one of these transverse beams 11 has a first transverse receptacle 13^{I} for a peripheral portion of a first photovoltaic panel 3^{I} and a second transverse receptacle 13^{II} for a second photovoltaic panel 3^{II} to be arranged laterally adjacent to the first 3^{I}. The seats 13^{I} and 13^{II} are symmetrically defined on the transverse beam 11 with respect to the central axis 15 of a section of the beam 11 which is substantially normal with respect to the ground.

According to Figure 4, each one of the longitudinal beams 12 has a first longitudinal receptacle 13^{III} for a peripheral portion of the first photovoltaic panel 3^{I} and a second longitudinal receptacle 13^{IV} for another photovoltaic panel 3^{III} to be arranged laterally adjacent to the panel 3^{I}. The receptacles 13^{III} and 13^{IV} are defined symmetrically on the longitudinal beam 12 with respect to a centerline direction 16 of a section of the beam 12 that is substantially normal with respect to the direction 20.

Advantageously, the supporting truss 6 has at least one draining channel 5 for rainwater and condensation.

The transverse beams 11 preferably have at least one transverse draining channel 5^{I} defined in a central portion thereof.

The longitudinal beams can have a longitudinal draining channel 5^{II} defined in a central portion thereof.

With reference to Figures 3 and 4, the truss 6 has a compartment 18 for accommodating the components of the photovoltaic system (wires, cables, inverters, connectors etc.) which is defined in the lower part of the beams 11 and 12.

Advantageously, thermal insulation means can be provided which are connected to the supporting frame 2.

In this first embodiment (Figure 1) these means can be provided with at least one first thermally insulated plate-like element 7 fixed to the frame 2, which is substantially parallel to the ground and extends in a direction that is substantially normal with respect to the vertical direction 10. This panel-like element 7, made of metal, plasterboard, wood etc., can be for example a false ceiling with a layer of rock wool or another insulating material.

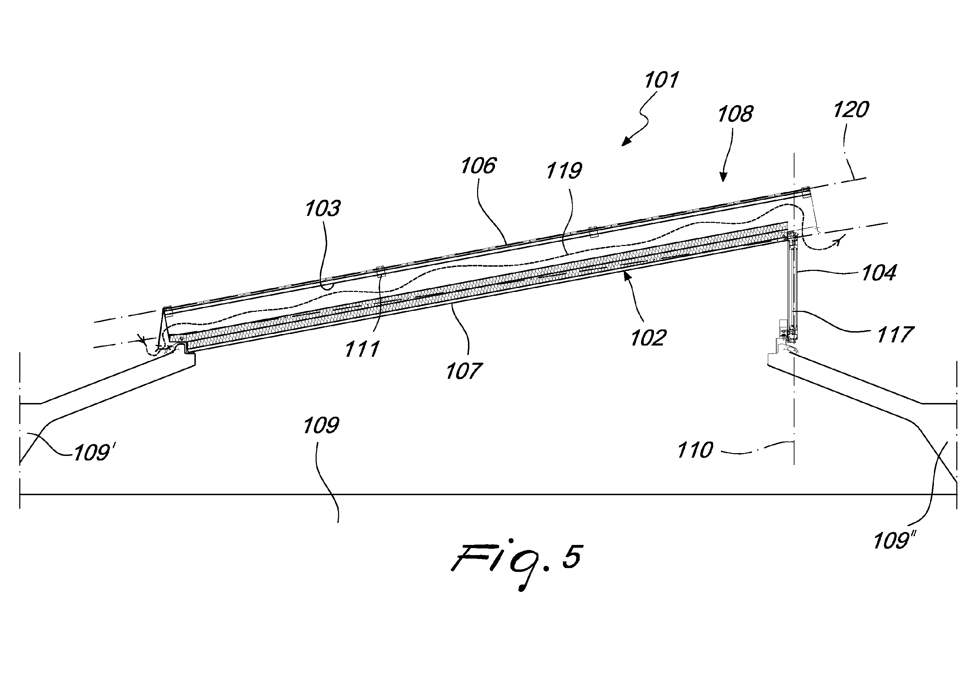

Figure 5 shows another embodiment of the photovoltaic plate for covering buildings, particularly for the industrial building sector, according to the invention, which herein is generally designated with the reference numeral 101 and which comprises a supporting frame 102, adapted to be associated with the upper portion of a building 109, for example the two prefabricated tiles 109^{I} and 109^{II}, and connected to microamorphous, monocrystalline or polycrystalline photovoltaic panels 103 covering the building 109, and means for the draining and discharge of rainwater toward the outside of the building 109.

Similarly to the frame 2, the frame 102 has at least one supporting member 104 for a truss 106 for supporting photovoltaic panels 103. The truss 106 defines a covering surface 108 which is inclined with respect to the ground. The member 104 defines a vertical direction 110 which is substantially normal with respect to the ground.

Also in this second embodiment, the truss 106 can have transverse beams 111 which extend along the direction of extension 120 of the panel 3 and longitudinal beams 112 which are substantially normal to the direction 120 on the covering surface 108. The transverse beams 11 and the longitudinal beams 12 are connected to each other.

Advantageously, in this solution the thermal insulation means have at least one second thermally insulated plate-like element 107, which again can be a false ceiling similar to the one in the previous example, arranged on the plane 108 and connected to the frame 102 at the end opposite the photovoltaic panels 103 (Figure 5).

In this second example, a window 117 can be provided which is defined on the frame 102 and provided on the plane identified by the supporting member 104.

Advantageously, the device can be the component of a modular assembly for covering buildings, particularly buildings for the industrial building sector.

Mounting a device made in this way is very simple because in essence the entire module can be pre-assembled at the factory and, once the frame 2 is firmly connected to the upper portion of the building 9, for example to the tiles 9^{I} and 9^{II}, the panels are then electrically connected to the photovoltaic system.

In the event of rain or snow, the slant of the plate makes it possible for most of the precipitated water to be collected by the tiles which, being impermeable, and also due to a slight slant, dispose of the water without problems.

Rainwater that does manage to permeate between the panels, and water from condensation and thawing of the frost and of the ice that forms for example in the morning in the coldest months of the year, is collected and channelled away by the drainage channels 5 which in turn drain it away onto the tiles.

In order to disassemble the structure, all that is necessary is to first dismount the panels and then dismantle the supporting frame by disconnecting it from the upper portion of the building.

From the foregoing it can thus be seen that the invention achieves the intended aim and objects and, in particular, attention is drawn to the fact that a photovoltaic plate for covering buildings, particularly for the industrial building sector, is provided which gives to the user the maximum energy yield due to the fact that the choice of panels is free and therefore monocrystalline and polycristalline panels, which are readily available on the market, can be used and with no limitation on dimensions.

In particular the provision of thermal insulation means makes it possible to obtain an energy performance certificate for the building and to ensure, while the means of discharge and draining of rainwater and condensation make it possible to prevent problems of humidity and mold.

Another advantage of the invention derives from the fact that the photovoltaic plate for covering buildings, particularly for the industrial building sector, thus provided can be manufactured in large numbers and assembled at the factory before transport and mounting on the building. Transport will be relatively cheap because the encumbrance dimensions of the plate before mounting are minimal (the columns 4 can be folded and together with the truss 6 they form a plane of limited thickness) and the mounting will be simple and quick since it involves tightening a few screws.

Moreover, thanks to the exceptional lightness of the structure, installation even on particularly tall buildings is greatly facilitated.

Another advantage of the invention derives from the fact that, thanks to the provision of compartments for accommodating cables, connectors, inverters and the like, connecting the various photovoltaic panels to each other and, finally, to the photovoltaic system is facilitated.

Another advantage of the plate, according to the invention, derives from the fact that it can be fixed to the building in a removable and modular manner, so that it is possible to adapt its configuration to changes in the intended use of the building, thus enabling the owner of the building to salvage most, if not all, of the photovoltaic modules without having to make a new investment for the photovoltaic system.

Last but not least, the use of means that are readily available on the market and the employment of common materials make the photovoltaic plate economically competitive.

The invention, thus conceived, is susceptible of numerous modifications and variations, all of which are within the scope of the appended claims.

Moreover, all the details may be substituted by other, technically equivalent elements.

In practice the materials employed, as well as the dimensions, may be any according to requirements, as long as they are consistent with the aim and objects of the invention.

The disclosures in Italian Patent Application No. AR2011A000015 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A photovoltaic plate (1) for covering buildings, particularly for the industrial building sector, **characterized in that** it comprises:
- a supporting frame (2), which is adapted to be associated with the upper portion of a building (9) and is connected to photovoltaic panels (3) for covering said building (9), and
- means for the draining and discharge of rainwater and condensation toward the outside of said building (9).

2. The photovoltaic plate according to claim 1, **characterized in that** said supporting frame (2) comprises at least one supporting member (4) for a truss (6) for supporting said photovoltaic panels (3), said supporting truss (6) defining a covering surface (8) which is inclined with respect to the ground and said at least one supporting member (4) defining a vertical direction (10) which is substantially normal with respect to the ground.

3. The photovoltaic plate according to one or more of the preceding claims, **characterized in that** said supporting frame (2) defines a ventilation chamber (19) arranged below said supporting truss (6) for cooling said photovoltaic panels (3).

4. The photovoltaic plate according to one or more of the preceding claims, **characterized in that** said supporting truss (6) comprises transverse beams (11) and longitudinal beams (12), which are connected and interconnected to each other, said transverse beams (11) extending along the direction of extension (20) of said photovoltaic panels (3) and said longitudinal beams (12) being substantially normal to said direction of extension (20) on said covering surface (8).

5. The photovoltaic plate according to one or more of the preceding claims, **characterized in that** it comprises fall-preventing means anchored to said supporting truss (6).

6. The photovoltaic plate according to one or more of the preceding claims, **characterized in that** it comprises means for engaging the feet of each one of said at least one supporting member (4) with the upper portion of said building (9).

7. The photovoltaic plate according to one or more of the preceding claims, **characterized in that** it comprises means for coupling said photovoltaic panels (3) to said supporting truss (6).

8. The photovoltaic plate according to one or more of the preceding claims, **characterized in that** said coupling means comprise, on said supporting truss (6), at least one receptacle (13) for a peripheral portion of each one of said photovoltaic panels (3) and means for locking said each one of said photovoltaic panels (3) to said supporting truss (6).

9. The photovoltaic plate according to one or more of the preceding claims, **characterized in that** said locking means comprise rubber pads (14) for fixing said each one of said photovoltaic panels (3) in a preset position.

10. The photovoltaic plate according to one or more of the preceding claims, **characterized in that** each one of said transverse beams (11) comprises a first transverse receptacle (13^{I}) for a peripheral portion of a first photovoltaic panel (3^{I}) and a second transverse receptacle (13^{II}) for a second photovoltaic panel (3^{II}) to be arranged laterally adjacent to said first photovoltaic panel (3^{I}), said first transverse receptacle (13^{I}) and said second transverse receptacle (13^{II}) being defined symmetrically on said each one of said transverse beams (11) with respect to the central axis (15) of a section of each one of said transverse beams (11) which is substantially normal to the ground.

11. The photovoltaic plate according to one or more of the preceding claims, **characterized in that** each one of said longitudinal beams (12) comprises a first longitudinal receptacle (13^{III}) for a peripheral portion of said first photovoltaic panel (3^{I}) and a second longitudinal receptacle (13^{IV}) for another photovoltaic panel (3^{III}) to be arranged laterally adjacent to said first photovoltaic panel (3^{I}), said first longitudinal receptacle (13^{III}) and said second longitudinal receptacle (13^{IV}) being formed symmetrically on said each one of said longitudinal beams (12) with respect to a centerline direction (16) of a section of each one of said longitudinal beams (12) which is substantially normal to said direction of extension (20).

12. The photovoltaic plate according to one or more of the preceding claims, **characterized in that** said supporting truss (6) comprises at least one draining channel (5) for rainwater and condensation.

13. The photovoltaic plate according to one or more of the preceding claims, **characterized in that** said transverse beams (11) comprise at least one transverse draining channel (5^{I}) defined in a central portion.

14. The photovoltaic plate according to one or more of the preceding claims, **characterized in that** said longitudinal beams (12) comprise at least one longitudinal draining channel (5^{II}) defined in a central portion.

15. The photovoltaic plate according to one or more of the preceding claims, **characterized in that** it comprises thermal insulation means which are connected to said supporting truss (2).

16. The photovoltaic plate according to one or more of the preceding claims, **characterized in that** said thermal insulation means comprise at least one first thermally insulated plate-like element (7), which is fixed to said supporting truss (2) and lies on a plane that is substantially parallel to the ground and extends in a direction which is substantially normal with respect to said vertical direction (10).

17. The photovoltaic plate according to one or more of the preceding claims, **characterized in that** said thermal insulation means comprise at least one second thermally insulated plate-like element (107), which lies on said covering surface (108) and is associated with said supporting truss (102) on the side opposite to said photovoltaic panels (103).
